# EUROPEAN PATENT SPECIFICATION

(11) **EP 4 572 262 B1**
(45) Date of publication and mention of the grant of the patent: **09.12.2026**
(21) Application number: 22957645.9
(22) Date of filing: 05.09.2022
(51) Int. Cl.: B60T 8/175, H04L 27/00

(54) **TORQUE ADJUSTMENT METHOD AND DEVICE, AND VEHICLE**
VERFAHREN UND VORRICHTUNG ZUR DREHMOMENTEINSTELLUNG SOWIE FAHRZEUG
PROCÉDÉ ET DISPOSITIF DE RÉGLAGE DE COUPLE, ET VÉHICULE

(43) Date of publication of application: 18.06.2025
(60) Divisional application: 26216100.3
(73) Proprietor: Yinwang Intelligent Technologies Co., Ltd., Shenzhen, Guangdong 518110 (CN)
(72) Inventor: XU, Yan, Shenzhen, Guangdong 518129 (CN); GUO, Zhenhua, Shenzhen, Guangdong 518129 (CN); SUN, Long, Shenzhen, Guangdong 518129 (CN); LI, Yuhao, Shenzhen, Guangdong 518129 (CN); WANG, Wei, Shenzhen, Guangdong 518129 (CN)
(74) Representative: Körber, Martin Hans
(86) International application number: PCT/CN2022/117108
(87) International publication number: WO 2024/050671

(56) References cited:
- WO-A1-2012/083777
- CN-A- 112 895 911
- CN-A- 113 547 934
- CN-A- 113 734 171
- CN-A- 114 407 676
- CN-A- 114 407 676
- CN-B- 108 528 268
- JP-B2- 6 308 941

## Description

### TECHNICAL FIELD

Embodiments of this application relate to the field of intelligent driving, and more specifically, to a torque adjustment method and apparatus, and a vehicle.

### BACKGROUND

When a vehicle travels on an abnormally paved road surface in an energy regeneration state, a driving wheel may be in a state of being detached from the ground or slipping. In this case, the driving wheel is affected by a regeneration torque. This causes a difference between a wheel speed and a speed to increase, and causes a slip rate to exceed a specific threshold, triggering an antilock brake system (antilock brake system, ABS) or dynamic tractive control (dynamic tractive control, DTC). When the ABS or the DTC is triggered, the vehicle exits the energy regeneration state. As a result, a driver cannot use energy regeneration in a period of time, leading to a poor user experience.

The following prior art documents can be cited : CN 108 528 268 B, JP 6 308941 B2 and CN 114 407 676 A.

### SUMMARY

The invention is defined in the appended independent claims 1 and 8.

Embodiments of this application provide a torque adjustment method and apparatus and a vehicle. Torque intervention is performed in a process in which a vehicle performs energy regeneration, to help avoid an increase in a slip rate of a wheel, thereby reducing a probability of triggering an ABS or DTC. In addition, the vehicle can be always kept in an energy regeneration state, to help improve driving experience of a user.

The vehicle in this application is a vehicle in a broad sense, and may be a transportation means (for example, a commercial vehicle, a passenger vehicle, a motorcycle, a flying car, or a train), an industrial vehicle (for example, a forklift, a trailer, or a tractor), an engineering vehicle (for example, an excavator, a bulldozer, or a crane), an agricultural device (for example, a lawn mower or a harvester), an entertainment device, a toy vehicle, or the like. A type of the vehicle is not specifically limited in embodiments of this application.

According to a first aspect, a torque adjustment method is provided. The method includes: obtaining a requested torque value; determining a first intervention torque value based on a wheel acceleration and a vehicle acceleration of a vehicle; and controlling, based on the requested torque value and the first intervention torque value, the vehicle to perform energy regeneration.

In an embodiment of this application, the vehicle is controlled to perform energy regeneration by using a requested torque and an intervention torque that is determined based on the wheel acceleration and the vehicle acceleration. This helps avoid an increase in a slip rate of a wheel, and reduce a probability of triggering an ABS or DTC. In addition, the vehicle can be always kept in an energy regeneration state, to help improve driving experience of a user.

In some possible implementations, the obtaining a requested torque value includes: obtaining the requested torque value when the vehicle is in the energy regeneration state.

In some possible implementations, the determining a first intervention torque value based on a wheel acceleration and a vehicle acceleration of a vehicle includes: determining the first intervention torque value based on a difference between the wheel acceleration and the vehicle acceleration of the vehicle.

In this embodiment of this application, a wheel state may be obtained by using the difference between the wheel acceleration and the vehicle acceleration, to determine whether the slip rate of the vehicle tends to continue to increase.

In some possible implementations, a mapping relationship between an intervention torque value and a difference between the wheel acceleration and the vehicle acceleration is stored in the vehicle.

In some possible implementations, the intervention torque value and the difference between the wheel acceleration and the vehicle acceleration are in a functional relationship.

In some possible implementations, the controlling, based on the requested torque value and the first intervention torque value, the vehicle to perform energy regeneration includes: controlling, based on the difference between the requested torque value and the first intervention torque value, the vehicle to perform energy regeneration.

With reference to the first aspect, in some implementations of the first aspect, the method further includes: obtaining a road surface type; and determining a second intervention torque value based on the road surface type, where the controlling, based on the requested torque value and the first intervention torque value, the vehicle to perform energy regeneration includes: controlling, based on the requested torque value, the first intervention torque value, and the second intervention torque value, the vehicle to perform energy regeneration.

In this embodiment of this application, the vehicle may perform torque intervention based on the road surface type, to avoid the increase in the slip rate of the wheel, and reduce the probability of triggering the ABS or the DTC. In addition, the vehicle can be always kept in the energy regeneration state, to help improve the driving experience of the user.

The road surface type may be a type of a road surface on which the vehicle is currently located.

In some possible implementations, a mapping relationship between a road surface type and an intervention torque value is stored in the vehicle.

In some possible implementations, the obtaining a road surface type includes: determining the road surface type based on data collected by a sensor outside a cockpit of the vehicle.

In some possible implementations, the obtaining a road surface type includes: obtaining the road surface type based on map information.

With reference to the first aspect, in some implementations of the first aspect, the obtaining a road surface type includes: obtaining a wheel speed fluctuation frequency of the vehicle; and determining the road surface type based on the wheel speed fluctuation frequency.

In this embodiment of this application, the wheel speed fluctuation frequency of the vehicle varies when the vehicle travels on a normally paved road surface and an abnormally paved road surface. The wheel speed fluctuation frequency may be further considered during torque intervention. Therefore, whether the road surface on which the vehicle is currently located is a normally paved road surface or an abnormally paved road surface is identified by using the wheel speed fluctuation frequency. In this way, a wheel speed fluctuation is suppressed by torque intervention, so that the increase in the slip rate of the wheel can be avoided, and the probability of triggering the ABS or the DTC can be reduced. In addition, the vehicle can be always kept in the energy regeneration state, to help improve the driving experience of the user.

In some possible implementations, a mapping relationship among a wheel speed fluctuation frequency, a road surface type, and an intervention torque value is stored in the vehicle.

In some possible implementations, the method further includes: obtaining a wheel speed fluctuation frequency of the vehicle; and determining the second intervention torque value based on the wheel speed fluctuation frequency.

The foregoing torque intervention may also be understood as that an absolute value of a torque value output by the vehicle to a motor during energy regeneration is less than an absolute value of the requested torque value determined based on a current traveling parameter (for example, one or more of an accelerator pedal opening, a brake pedal opening, and a vehicle speed) of the vehicle.

In some possible implementations, a mapping relationship between a wheel speed fluctuation frequency and an intervention torque value is stored in the vehicle.

In some possible implementations, the wheel speed fluctuation frequency and the intervention torque value are in a functional relationship.

In some possible implementations, the determining the second intervention torque value based on the wheel speed fluctuation frequency includes: determining, based on the wheel speed fluctuation frequency, a type of a road surface on which the vehicle is currently located; and determining the second intervention torque value based on the type of the road surface on which the vehicle is currently located.

In some possible implementations, a mapping relationship between a road surface type and an intervention torque value is stored in the vehicle.

With reference to the first aspect, in some implementations of the first aspect, the controlling, based on the requested torque value, the first intervention torque value, and the second intervention torque value, the vehicle to perform energy regeneration includes: determining a third intervention torque value based on the first intervention torque value and the second intervention torque value; and controlling, based on the requested torque value and the third intervention torque value, the vehicle to perform energy regeneration.

In this embodiment of this application, the vehicle may determine the third intervention torque value based on the first intervention torque value and the second intervention torque value, and then the vehicle is controlled, based on the requested torque value and the third intervention torque value, to perform energy regeneration. In this way, the increase in the slip rate of the wheel can be avoided, and the probability of triggering the ABS or the DTC can be reduced. In addition, the vehicle can be always kept in the energy regeneration state, to help improve the driving experience of the user.

With reference to the first aspect, in some implementations of the first aspect, the determining a third intervention torque value based on the first intervention torque value and the second intervention torque value includes: determining a lower one of the first intervention torque value and the second intervention torque value as the third intervention torque value.

In this embodiment of this application, a lower one of the first intervention torque value and the second intervention torque value may be determined as the third intervention torque value. This may further improve efficiency of energy regeneration performed by the vehicle while avoiding triggering the ABS or the DTC due to the increase in the slip rate of the wheel.

With reference to the first aspect, in some implementations of the first aspect, the method further includes: obtaining a slip rate of the vehicle; and determining a correction coefficient based on the slip rate, where the controlling, based on the requested torque value and the third intervention torque value, the vehicle to perform energy regeneration includes: determining a fourth intervention torque value based on the third intervention torque value and the correction coefficient; and controlling, based on the requested torque value and the fourth intervention torque value, the vehicle to perform energy regeneration.

In this embodiment of this application, the slip rate of the vehicle may be further considered during torque intervention. The third intervention torque value is corrected by using the correction coefficient obtained through calculation of the slip rate. In this way, torque intervention is performed by comprehensively considering factors such as the wheel acceleration, the vehicle acceleration, the wheel speed fluctuation frequency, and the slip rate, so that the increase in the slip rate of the wheel can be avoided, and the probability of triggering the ABS or the DTC can be reduced. In addition, the vehicle can be always kept in the energy regeneration state, to help improve the driving experience of the user.

In some possible implementations, a larger slip rate indicates a larger correction coefficient.

In some possible implementations, a mapping relationship between a slip rate and a correction coefficient is stored in the vehicle.

In some possible implementations, the slip rate and the correction coefficient are in a functional relationship.

With reference to the first aspect, in some implementations of the first aspect, the method further includes: obtaining a slip rate of the vehicle; and determining a correction coefficient based on the slip rate, where the controlling, based on the requested torque value and the first intervention torque value, the vehicle to perform energy regeneration includes: determining a fifth intervention torque value based on the first intervention torque value and the correction coefficient; and controlling, based on the requested torque value and the fifth intervention torque value, the vehicle to perform energy regeneration.

In this embodiment of this application, the slip rate of the vehicle may be further considered during torque intervention. The first intervention torque value is corrected by using the correction coefficient obtained through calculation of the slip rate. In this way, torque intervention is performed by comprehensively considering factors such as the wheel acceleration, the vehicle acceleration, and the slip rate, so that the increase in the slip rate of the wheel can be avoided, and the probability of triggering the ABS or the DTC can be reduced. In addition, the vehicle can be always kept in the energy regeneration state, to help improve the driving experience of the user.

With reference to the first aspect, in some implementations of the first aspect, the method further includes: when a quantity of times of torque intervention during control of the vehicle to perform energy regeneration is greater than or equal to a preset quantity of times, controlling, based on a historical torque intervention value, the vehicle to perform energy regeneration; or when duration of torque intervention during control of the vehicle to perform energy regeneration is greater than or equal to preset duration, controlling, based on a historical torque intervention value, the vehicle to perform energy regeneration.

In this embodiment of this application, when the quantity of times of torque intervention or the duration of torque intervention during control of the vehicle to perform energy regeneration meets a condition, the vehicle may be controlled, based on the historical torque intervention value, to perform energy regeneration. In this way, computing resources of the vehicle can be saved. In addition, the probability of triggering the ABS or the DTC in a subsequent traveling process of the vehicle can also be reduced.

With reference to the first aspect, in some implementations of the first aspect, the method further includes: during control of the vehicle to perform energy regeneration, increasing a brake torque of a brake system of the vehicle, and/or starting a wind resistance increasing apparatus.

In this embodiment of this application, during torque intervention, the brake torque of the brake system of the vehicle may be increased and/or the wind resistance increasing apparatus may be started, to help avoid a prolonged brake distance of the vehicle caused by continuous torque intervention, and improve safety of the vehicle. In addition, this may further avoid giving the user a feeling of forward movement during torque intervention, and help improve the driving experience of the user.

With reference to the first aspect, in some implementations of the first aspect, the obtaining a requested torque value includes: determining the requested torque value based on at least one of a vehicle speed of the vehicle, an accelerator pedal opening of the vehicle, and a brake pedal opening of the vehicle.

According to a second aspect, a torque adjustment apparatus is provided. The apparatus includes: an obtaining unit, configured to obtain a requested torque value; a determining unit, configured to determine a first intervention torque value based on a wheel acceleration and a vehicle acceleration of a vehicle; and a control unit, configured to control, based on the requested torque value and the first intervention torque value, the vehicle to perform energy regeneration.

With reference to the second aspect, in some implementations of the second aspect, the obtaining unit is further configured to obtain a road surface type; and the determining unit is further configured to determine a second intervention torque value based on the road surface type, where the control unit is configured to control, based on the requested torque value, the first intervention torque value, and the second intervention torque value, the vehicle to perform energy regeneration.

With reference to the second aspect, in some implementations of the second aspect, the obtaining unit is further configured to obtain a wheel speed fluctuation frequency of the vehicle; and the determining unit is further configured to determine the road surface type based on the wheel speed fluctuation frequency.

With reference to the second aspect, in some implementations of the second aspect, the determining unit is configured to determine a third intervention torque value based on the first intervention torque value and the second intervention torque value; and the control unit is configured to control, based on the requested torque value and the third intervention torque value, the vehicle to perform energy regeneration.

With reference to the second aspect, in some implementations of the second aspect, the determining unit is configured to determine a lower one of the first intervention torque value and the second intervention torque value as the third intervention torque value.

With reference to the second aspect, in some implementations of the second aspect, the obtaining unit is further configured to obtain a slip rate of the vehicle; and the determining unit is further configured to determine a correction coefficient based on the slip rate, where the control unit is configured to: determine a fourth intervention torque value based on the third intervention torque value and the correction coefficient; and control, based on the requested torque value and the fourth intervention torque value, the vehicle to perform energy regeneration.

With reference to the second aspect, in some implementations of the second aspect, the obtaining unit is further configured to obtain a slip rate of the vehicle; and the determining unit is further configured to determine a correction coefficient based on the slip rate, where the control unit is configured to: determine a fifth intervention torque value based on the first intervention torque value and the correction coefficient; and control, based on the requested torque value and the fifth intervention torque value, the vehicle to perform energy regeneration.

With reference to the second aspect, in some implementations of the second aspect, the control unit is further configured to: when a quantity of times of torque intervention during control of the vehicle to perform energy regeneration is greater than or equal to a preset quantity of times, control, based on a historical torque intervention value, the vehicle to perform energy regeneration; or when duration of torque intervention during control of the vehicle to perform energy regeneration is greater than or equal to preset duration, control, based on a historical torque intervention value, the vehicle to perform energy regeneration.

With reference to the second aspect, in some implementations of the second aspect, the control unit is further configured to: during control of the vehicle to perform energy regeneration, increase a brake torque of a brake system of the vehicle, and/or start a wind resistance increasing apparatus.

With reference to the second aspect, in some implementations of the second aspect, the obtaining unit is configured to determine the requested torque value based on at least one of a vehicle speed of the vehicle, an accelerator pedal opening of the vehicle, and a brake pedal opening of the vehicle.

According to a third aspect, a torque adjustment apparatus is provided. The apparatus includes a processing unit and a storage unit, where the storage unit is configured to store instructions, and the processing unit executes the instructions stored in the storage unit, to enable the apparatus to perform any possible method in the first aspect.

According to a fourth aspect, a torque adjustment system is provided. The system includes a motor and the torque adjustment apparatus according to either of the second aspect or the third aspect.

According to a fifth aspect, a vehicle is provided. The vehicle includes the torque adjustment apparatus according to either of the second aspect or the third aspect, or includes the torque adjustment system according to the fourth aspect.

According to a sixth aspect, a computer program product is provided. The computer program product includes computer program code, and when the computer program code is run on a computer, the computer is enabled to perform any possible method in the first aspect.

It should be noted that all or some of the computer program code may be stored in a first storage medium. The first storage medium may be encapsulated together with a processor, or may be encapsulated separately from a processor. This is not specifically limited in this embodiment of this application.

According to a seventh aspect, a computer-readable medium is provided. The computer-readable medium stores program code, and when the computer program code is run on a computer, the computer is enabled to perform any possible method in the first aspect.

According to an eighth aspect, an embodiment of this application provides a chip system. The chip system includes a processor, configured to invoke a computer program or computer instructions stored in a memory, to enable the processor to perform any possible method in the first aspect.

With reference to the eighth aspect, in a possible implementation, the processor is coupled to the memory through an interface.

With reference to the eighth aspect, in a possible implementation, the chip system further includes a memory. The memory stores a computer program or computer instructions.

### BRIEF DESCRIPTION OF DRAWINGS

FIG. 1 is a block diagram of functions of a vehicle according to an embodiment of this application;
FIG. 2 is a schematic flowchart of a torque adjustment method according to an embodiment of this application;
FIG. 3 is a group of graphical user interfaces GUIs according to an embodiment of this application;
FIG. 4 is another schematic flowchart of a torque adjustment method according to an embodiment of this application;
FIG. 5 is another schematic flowchart of a torque adjustment method according to an embodiment of this application;
FIG. 6 is another schematic flowchart of a torque adjustment method according to an embodiment of this application; and
FIG. 7 is a block diagram of a torque adjustment apparatus according to an embodiment of this application.

### DESCRIPTION OF EMBODIMENTS

In the descriptions of embodiments of this application, "/" represents "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists.

The prefix words "first", "second", and the like in embodiments of this application are merely intended to distinguish between different described objects, and impose no limitation on locations, sequences, priorities, quantities, content, or the like of the described objects. In embodiments of this application, the use of prefix words such as ordinal numbers to distinguish between described objects does not constitute a limitation on the described objects. For statements of the described objects, refer to descriptions of the context in claims or embodiments, and no unnecessary limitations shall be constituted by the use of such prefix words. In the descriptions of embodiments, unless otherwise specified, "a plurality of" means two or more.

As described above, when a vehicle travels on an abnormally paved road surface in an energy regeneration state, a driving wheel may be in a state of being detached from the ground or slipping. In this case, the driving wheel is affected by a regeneration torque. This causes a difference between a wheel speed and a speed to increase, and causes a slip rate to exceed a specific threshold, triggering an ABS or DTC. When the ABS or the DTC is triggered, the vehicle exits the energy regeneration state. As a result, a driver cannot use energy regeneration in a period of time, leading to a poor user experience.

Embodiments of this application provide a torque adjustment method and apparatus, and a transport vehicle. Torque intervention is performed to control a vehicle to perform energy regeneration, to help avoid an increase in a slip rate of a wheel, thereby reducing a probability of triggering an ABS or DTC. In addition, the vehicle can be always kept in an energy regeneration state, to help improve driving experience of a user. The following describes technical solutions of embodiments in this application with reference to accompanying drawings.

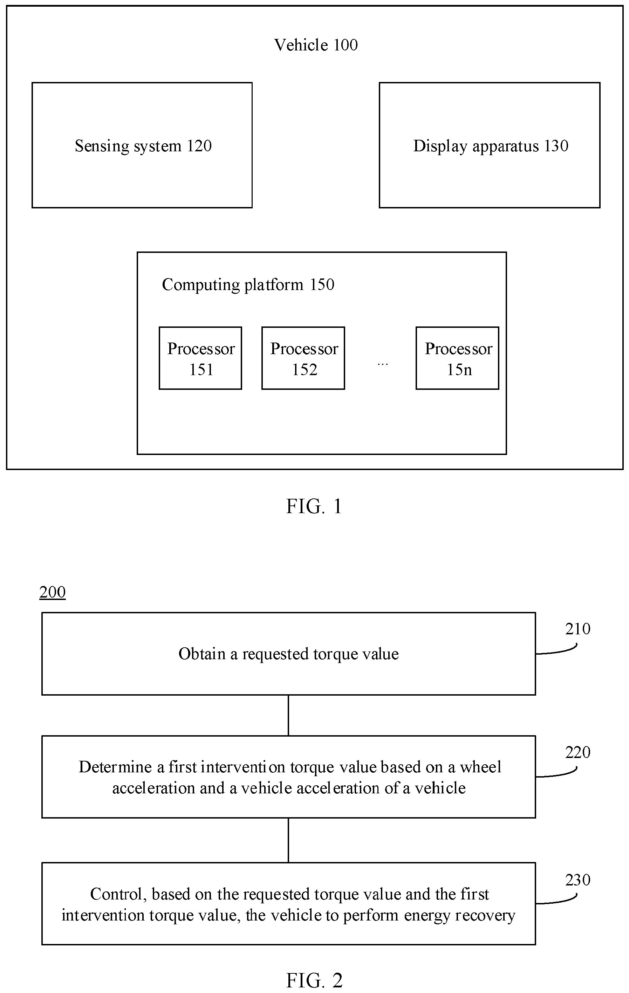

FIG. 1 is a block diagram of functions of a vehicle 100 according to an embodiment of this application. The vehicle 100 may include a sensing system 120, a display apparatus 130, and a computing platform 150. The sensing system 120 may include one or more sensors that sense information about an environment around the vehicle 100. For example, the sensing system 120 may include a positioning system, and the positioning system may be a global positioning system (global positioning system, GPS), a BeiDou system, or another positioning system. The sensing system 120 may further include one or more of an inertial measurement unit (inertial measurement unit, IMU), a lidar, a millimeter-wave radar, an ultrasonic radar, and an image shooting apparatus.

Some or all functions of the vehicle 100 are controlled by the computing platform 150. The computing platform 150 may include one or more processors, for example, processors 151 to 15n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory, to implement a corresponding function.

The display apparatus 130 in a cockpit is mainly classified into two types: A first type is a vehicle-mounted display screen, and a second type is a projection display screen, for example, an HUD. The vehicle-mounted display screen is a physical display screen, and is an important part of an in-vehicle infotainment system. A plurality of display screens may be disposed in the cockpit, for example, a digital instrument display screen, a central display screen, a display screen in front of a passenger in a front passenger seat (also referred to as a front-seat passenger), a display screen in front of a back-seat passenger on the left, a display screen in front of a back-seat passenger on the right, and even a vehicle window may be used as a display screen for display. The head-up display is also referred to as a head-up display system. The head-up display is mainly configured to display driving information such as a speed and navigation on a display device (for example, a windshield) in front of a driver. In this way, a line-of-sight distraction time of the driver is reduced, a pupil change caused by line-of-sight distraction of the driver is avoided, and traveling safety and comfort are improved. The HUD includes, for example, a combiner head-up display (combiner-HUD, C-HUD) system, a windshield head-up display (windshield-HUD, W-HUD) system, and an augmented reality head-up display (augmented reality HUD, AR-HUD) system. The HUD may also include another type of system with evolution of technologies. This is not limited in this application.

FIG. 2 shows a schematic flowchart of a torque adjustment method 200 according to an embodiment of this application. The method 200 may be performed by a vehicle, or the method 200 may be performed by the foregoing computing platform, or the method 200 may be performed by a system-on-a-chip (system-on-a-chip, SoC) on the computing platform, or the method 200 may be performed by a processor on the computing platform, or the method 200 may be performed by a vehicle control unit (vehicle control unit, VCU), or the method 200 may be performed by a motor control unit (motor control unit, MCU), or the method 200 may be performed by a system including a vehicle control unit and an electronic stability control (electronic stability control, ESC), or the method 200 may be performed by a system including a VCU and an MCU. As shown in FIG. 2, the method 200 includes the following steps.

S210: Obtain a requested torque value.

In a possible implementation, the requested torque value is obtained when the vehicle is in an energy regeneration state. That the vehicle is in an energy regeneration state may be understood as that a drive motor of the vehicle is in a power generation state, or the drive motor is converting mechanical energy into electric energy.

That the vehicle is in an energy regeneration state may also be understood as that the vehicle determines that an energy regeneration function is enabled.

For example, the vehicle may enable the energy regeneration function by default. The energy regeneration function may be disabled when an operation of disabling the energy regeneration function by the user by using a control on a vehicle-mounted display screen is detected. After the energy regeneration function is disabled, the vehicle is in a non-energy regeneration state.

For another example, a steering wheel of the vehicle includes a button for the energy regeneration function. When an operation of holding down the button by the user is detected, the vehicle may be in the energy regeneration state.

In an embodiment, the obtaining a requested torque value includes: determining the requested torque value based on at least one of a vehicle speed of the vehicle, an accelerator pedal opening of the vehicle, and a brake pedal opening of the vehicle.

For example, the vehicle may determine a current energy regeneration requested torque value based on a current accelerator pedal opening and a current vehicle speed.

Optionally, a mapping relationship among an accelerator pedal opening, a vehicle speed, and an energy regeneration requested torque value may be stored in the vehicle. The vehicle may determine the requested torque value based on a current accelerator pedal opening, a current vehicle speed, and the mapping relationship.

S220: Determine a first intervention torque value based on a wheel acceleration and a vehicle acceleration of the vehicle.

In an embodiment, the determining a first intervention torque value based on a wheel acceleration and a vehicle acceleration of the vehicle includes: determining the first intervention torque value based on a difference between the wheel acceleration and the vehicle acceleration of the vehicle.

In an embodiment, the determining a first intervention torque value based on a wheel acceleration and a vehicle acceleration of the vehicle includes: determining the first intervention torque value based on a difference between the wheel acceleration and the vehicle acceleration of the vehicle and a mapping relationship between an intervention torque value and a difference between the wheel acceleration and the vehicle acceleration.

For example, Table 1 shows a mapping relationship between an intervention torque value and a difference between the wheel acceleration and the vehicle acceleration.

**Table 1**

| Difference between the wheel acceleration and the vehicle acceleration | Intervention torque value |
|---|---|
| [0, 1 m/s²) | 0 |
| [1 m/s², 2 m/s²) | Requested torque value × 10% |
| [2 m/s², 3 m/s²) | Requested torque value × 20% |
| ... | ... |

For example, if the difference between the wheel acceleration and the vehicle acceleration is 1.5 m/s², it may be determined that the first intervention torque value is the requested torque value multiplied by 10%. If the requested torque value is 1000 N·m, the first intervention torque value is 100 N·m.

The mapping relationship, shown in Table 1, between an intervention torque value and a difference between the wheel acceleration and the vehicle acceleration is merely an example. This is not specifically limited in this embodiment of this application.

In an embodiment, an intervention torque value and a difference between the wheel acceleration and the vehicle acceleration may alternatively be in a functional relationship. The vehicle may determine the first intervention torque value based on the functional relationship and the difference between the wheel acceleration and the vehicle acceleration.

S230: Control, based on the requested torque value and the first intervention torque value, the vehicle to perform energy regeneration.

In an embodiment, the controlling, based on the requested torque value and the first intervention torque value, the vehicle to perform energy regeneration includes: controlling, based on a difference between the requested torque value and the first intervention torque value, the vehicle to perform energy regeneration.

For example, the VCU determines, based on the current accelerator pedal opening and the current vehicle speed of the vehicle, that the requested torque value is 1000 N·m. The VCU determines, based on the wheel acceleration and the vehicle acceleration, that the first intervention torque value is 100 N·m. In this case, the VCU may output a difference (900 N·m) between the requested torque value and the first intervention torque value to the motor configured for energy regeneration. The motor may perform energy regeneration based on the difference.

In this embodiment of this application, that the vehicle performs torque intervention when the vehicle is in the energy regeneration state may be understood as that an absolute value of a torque value output by the vehicle to the motor during energy regeneration is less than an absolute value of the requested torque value determined based on a current traveling parameter (for example, one or more of the accelerator pedal opening, the brake pedal opening, and the vehicle speed) of the vehicle.

In an embodiment, the method 200 further includes: obtaining a wheel speed fluctuation frequency of the vehicle; and determining a second intervention torque value based on the wheel speed fluctuation frequency, where the controlling, based on the requested torque value and the first intervention torque value, the vehicle to perform energy regeneration includes: controlling, based on the requested torque value, the first intervention torque value, and the second intervention torque value, the vehicle to perform energy regeneration.

In an embodiment, the determining a second intervention torque value based on the wheel speed fluctuation frequency includes: determining the second intervention torque value based on the wheel speed fluctuation frequency and a mapping relationship between a wheel speed fluctuation frequency and an intervention torque value.

For example, Table 2 shows a mapping relationship between a wheel speed fluctuation frequency and an intervention torque value.

**Table 2**

| Wheel speed fluctuation frequency | Intervention torque value |
|---|---|
| [10 Hz, 14 Hz) | 0 |
| [6 Hz, 10 Hz) | Requested torque value × 20% |
| [2 Hz, 6 Hz) | Requested torque value × 30% |
| [0, 2 Hz] | Requested torque value × 40% |
| ... | ... |

For example, when a current wheel speed fluctuation frequency of the vehicle is 7 Hz, it may be determined, based on the mapping relationship shown in Table 2, that the second intervention torque value is the requested torque value multiplied by 20%. If the requested torque value is 1000 N·m, the second intervention torque value is 200 N·m.

The correspondence between a wheel speed fluctuation frequency and an intervention torque value shown in Table 2 is merely an example. This is not specifically limited in this embodiment of this application.

In an embodiment, the wheel speed fluctuation frequency and the intervention torque value may alternatively be in a functional relationship.

In an embodiment, the determining a second intervention torque value based on the wheel speed fluctuation frequency includes: determining, based on the wheel speed fluctuation frequency, a type of a road surface on which the vehicle is currently located; and determining the second intervention torque value based on the type of the road surface on which the vehicle is currently located.

For example, Table 3 shows a mapping relationship between a wheel speed fluctuation frequency, a road surface type, and an intervention torque value.

**Table 3**

| Wheel speed fluctuation frequency | Road surface type | Intervention torque value |
|---|---|---|
| [10 Hz, 14 Hz) | Normally paved road surface | 0 |
| [7 Hz, 8 Hz) | Bumpy road surface | Requested torque value × 20% |
| [4 Hz, 6 Hz) | Wet and slippery road surface | Requested torque value × 30% |
| ... | ... | ... |

For example, when a current wheel speed fluctuation frequency of the vehicle is 7.5 Hz, it may be determined, based on the mapping relationship shown in Table 3, that the vehicle is currently on a bumpy road surface. Further, it may be determined, based on the mapping relationship shown in Table 3, that the second intervention torque value is the requested torque value multiplied by 20%. If the requested torque value is 1000 N·m, the second intervention torque value is 200 N·m.

The mapping relationship between a wheel speed fluctuation frequency, a road surface type, and an interference torque value shown in Table 3 is merely an example. This is not specifically limited in this embodiment of this application.

The foregoing describes a process of determining the road surface type by using the wheel speed fluctuation frequency, and then determining the interference torque value by using the road surface type. This embodiment of this application is not limited thereto. For example, a current road surface type may alternatively be determined based on data collected by a sensor (for example, a camera) outside a cockpit of the vehicle, to determine the intervention torque value based on the road surface type. In an embodiment, a current road surface type may alternatively be obtained based on map information, to determine the intervention torque value based on the road surface type.

In an embodiment, the controlling, based on the requested torque value, the first intervention torque value, and the second intervention torque value, the vehicle to perform energy regeneration includes: determining a third intervention torque value based on the first intervention torque value and the second intervention torque value; and controlling, based on the requested torque value and the third intervention torque value, the vehicle to perform energy regeneration.

In an embodiment, the third intervention torque value is an average value of the first intervention torque value and the second intervention torque value.

For example, if the first intervention torque value is 100 N·m, and the second intervention torque value is 200 N·m, the third intervention torque value is 150 N·m.

In an embodiment, the third intervention torque value is a torque value obtained after weighted averaging is performed on the first intervention torque value and the second intervention torque value.

For example, a formula for performing weighted averaging based on the first intervention torque value and the second intervention torque value to obtain the third intervention torque value may be:

Third intervention torque value = First intervention torque value × First weighting coefficient + Second intervention torque value × Second weighting coefficient

A sum of the first weighting coefficient and the second weighting coefficient is 1.

In an embodiment, the first weighting coefficient is greater than the second weighting coefficient. For example, if the first intervention torque value is 100 N·m, the second intervention torque value is 200 N·m, the first weighting coefficient is 0.6, and the second weighting coefficient is 0.4, the third intervention torque value is 140 N·m.

In an embodiment, the determining a third intervention torque value based on the first intervention torque value and the second intervention torque value includes: determining a lower one of the first intervention torque value and the second intervention torque value as the third intervention torque value.

For example, if the first intervention torque value is 100 N·m, and the second intervention torque value is 200 N·m, the third intervention torque value is 100 N·m.

In an embodiment, the method 200 further includes: obtaining a slip rate of the vehicle; and determining a correction coefficient based on the slip rate, where the controlling, based on the requested torque value and the third intervention torque value, the vehicle to perform energy regeneration includes: determining a fourth intervention torque value based on the third intervention torque value and the correction coefficient; and controlling, based on the requested torque value and the fourth intervention torque value, the vehicle to perform energy regeneration.

In an embodiment, the determining a correction coefficient based on the slip rate includes: determining the correction coefficient based on the slip rate and a mapping relationship between a slip rate and a correction coefficient.

For example, Table 4 shows a mapping relationship between a slip rate and a correction coefficient.

**Table 4**

| Slip rate | Correction coefficient |
|---|---|
| [0, 10%) | 0 |
| [10%, 15%) | 1.1 |
| [15%, 20%) | 1.5 |
| ... | ... |

For example, when a current slip rate of the vehicle is 12%, it may be determined, based on the mapping relationship shown in Table 4, that the correction coefficient is 1.1.

The mapping relationship between a slip rate and a correction coefficient shown in Table 4 is merely an example. This is not specifically limited in this embodiment of this application.

In an embodiment, the slip rate and the correction coefficient may alternatively be in a functional relationship.

In an embodiment, the fourth intervention torque value is a product of the third intervention torque value and the correction coefficient. For example, if the correction coefficient is 1.1 and the third intervention torque value is 100 N·m, the fourth intervention torque value is 110 N·m.

In an embodiment, the controlling, based on the requested torque value and the fourth intervention torque value, the vehicle to perform energy regeneration includes: controlling, based on a difference between the requested torque value and the fourth intervention torque value, the vehicle to perform energy regeneration.

For example, the VCU determines, based on the current accelerator pedal opening and the current vehicle speed of the vehicle, that the requested torque value is 1000 N·m. The VCU determines, based on the wheel acceleration and the vehicle acceleration, that the first intervention torque value is 100 N·m. The VCU determines, based on the wheel speed fluctuation frequency, that the second intervention torque value is 200 N·m. The third intervention torque value may be a smaller value of the first intervention torque value and the second intervention torque value. The VCU determines, based on the current slip rate of the vehicle, that the correction coefficient is 1.1. The VCU may determine the fourth intervention torque value (for example, 110 N·m) based on the correction coefficient and the third intervention torque value. In this case, the VCU may output a difference (890 N·m) between the requested torque value and the fourth intervention torque value to the motor configured for energy regeneration. The motor may perform energy regeneration based on the difference. In an embodiment, the foregoing method may alternatively be performed by a motor control unit or another controller.

The foregoing uses an example in which the correction coefficient is determined by using the slip rate for description. This embodiment of this application is not limited thereto. For example, a fifth intervention torque value may alternatively be determined based on a current slip rate of the vehicle.

In an embodiment, the determining a fifth intervention torque value based on a current slip rate of the vehicle includes: determining the fifth intervention torque value based on the current slip rate of the vehicle and a mapping relationship between a slip rate and an intervention torque value.

For example, Table 5 shows a mapping relationship between a slip rate and an intervention torque value.

**Table 5**

| Slip rate | Intervention torque value |
|---|---|
| [0, 10%) | 0 |
| [10%, 15%) | Requested torque value × 30% |
| [15%, 20%) | Requested torque value × 50% |
| ... | ... |

For example, when a current slip rate of the vehicle is 12% and the requested torque value is 1000 N·m, it may be determined, based on the mapping relationship shown in Table 5, that the fifth intervention torque value is 300 N·m.

In an embodiment, the vehicle may be controlled, based on the requested torque value, the first intervention torque value, the second intervention torque value, and the fifth intervention torque value, to perform energy regeneration.

For example, the VCU determines, based on the current accelerator pedal opening and the current vehicle speed of the vehicle, that the requested torque value is 1000 N·m. The VCU determines, based on the wheel acceleration and the vehicle acceleration, that the first intervention torque value is 100 N·m. The VCU determines, based on the wheel speed fluctuation frequency, that the second intervention torque value is 200 N·m. The VCU determines, based on the current slip rate of the vehicle, that the fifth intervention torque value is 300 N·m. In this case, the VCU may output, to the motor, a difference (800 N·m) between the requested torque value and an average value (200 N·m) of the first intervention torque value, the second intervention torque value, and the fifth intervention torque value, so that the motor may perform energy regeneration based on the difference.

Alternatively, a torque output to the motor may be calculated through weighted averaging. For example, a weighting coefficient of the first intervention torque value is 0.3, a weighting coefficient of the second intervention torque value is 0.5, and a weighting coefficient of the fifth intervention torque value is 0.2. The VCU may output, to the motor, a difference (810 N·m) between the requested torque value and a weighted average value (190 N·m) of the first intervention torque value, the second intervention torque value, and the fifth intervention torque value, so that the motor may control, based on the difference, the vehicle to perform energy regeneration.

The mapping relationship between a slip rate and an intervention torque value shown in Table 5 is merely an example. This is not specifically limited in this embodiment of this application.

In an embodiment, the method 200 further includes: obtaining a slip rate of the vehicle; and determining a correction coefficient based on the slip rate, where the controlling, based on the requested torque value and the first intervention torque value, the vehicle to perform energy regeneration includes: determining a fifth intervention torque value based on the first intervention torque value and the correction coefficient; and controlling, based on the requested torque value and the fifth intervention torque value, the vehicle to perform energy regeneration.

For the foregoing process of determining the correction coefficient by using the slip rate, refer to the descriptions in the foregoing embodiment. Details are not described herein again.

For example, the VCU determines, based on the current accelerator pedal opening and the current vehicle speed of the vehicle, that the requested torque value is 1000 N·m. The VCU determines, based on the wheel acceleration and the vehicle acceleration, that the first intervention torque value is 100 N·m. The VCU determines, based on the current slip rate of the vehicle, that the correction coefficient is 1.1. In this case, the VCU may output a difference (890 N·m) between the requested torque value and a product of the first intervention torque value and the correction coefficient to the motor configured for energy regeneration. The motor may perform energy regeneration based on the difference between the requested torque value and the first intervention torque value.

The foregoing uses an example in which the correction coefficient is determined based on the slip rate for description. This embodiment of this application is not limited thereto. For example, a fifth intervention torque value may alternatively be determined based on a current slip rate of the vehicle. In this way, the vehicle is controlled, based on the requested torque value, the first intervention torque value, and the fifth intervention torque value, to perform energy regeneration.

For example, the VCU determines, based on the current accelerator pedal opening and the current vehicle speed of the vehicle, that the requested torque value is 1000 N·m. The VCU determines, based on the wheel acceleration and the vehicle acceleration, that the first intervention torque value is 100 N·m. The VCU determines, based on the current slip rate of the vehicle, that the fifth intervention torque value is 300 N·m. An average value of the first intervention torque value and the fifth intervention torque value is 200 N·m. In this case, the VCU may output a difference (800 N·m) between the requested torque value and the average value to the motor configured for energy regeneration. The motor may perform energy regeneration based on the difference between the requested torque value and the average value.

Alternatively, a difference (for example, 900 N·m) between the requested torque value and a smaller value of the first intervention torque value and the fifth intervention torque value may be output to the motor. The motor may perform energy regeneration based on the difference.

In an embodiment, the method 200 further includes: when a quantity of times of torque intervention during control of the vehicle to perform energy regeneration is greater than or equal to a preset quantity of times, controlling, based on a historical torque intervention value, the vehicle to perform energy regeneration; or when duration of torque intervention during control of the vehicle to perform energy regeneration is greater than or equal to preset duration, controlling, based on a historical torque intervention value, the vehicle to perform energy regeneration.

For example, in a process in which the vehicle is in the energy regeneration state and travels on a road segment, a quantity of times of torque intervention is greater than or equal to 3. For example, at a moment T₁ to a moment T₂, if the requested torque value is 1000 N·m, and the intervention torque value is 200 N·m, the motor may perform energy regeneration based on a difference (800 N·m) between the requested torque value and the intervention torque value. For another example, at the moment T₂ to a moment T₃, if the requested torque value is 800 N·m and the intervention torque value is 200 N·m, the motor may perform energy regeneration based on a difference (600 N·m) between the requested torque value and the intervention torque value. For still another example, at the moment T₃ to a moment T₄, if the requested torque value is 500 N·m and the intervention torque value is 100 N·m, the motor may perform energy regeneration based on a difference (400 N·m) between the requested torque value and the intervention torque value. After the vehicle performs three times of torque intervention, an average value (for example, 600 N·m) of torques used by the motor in the first three times may be used after the moment T₄, to control the vehicle to perform energy regeneration.

For example, in a process in which the vehicle is in the energy regeneration state and travels on a road segment, when duration of torque intervention is greater than or equal to 30 seconds (second), the vehicle may perform energy regeneration based on an average value of torques used by the motor within 30s.

In an embodiment, the historical torque intervention value may further include an intervention torque value determined when the vehicle travels on another road segment before traveling on the first road segment. Alternatively, the historical torque intervention value may further include an intervention torque value determined when the vehicle travels on the first road segment last time.

In this embodiment of this application, when the quantity of times of torque intervention or the duration of torque intervention during control of the vehicle to perform energy regeneration meets a condition, the vehicle may be controlled, based on the historical torque intervention value, to perform energy regeneration. In this way, computing resources of the vehicle can be saved. In addition, triggering of the ABS or the DTC in a subsequent traveling process of the vehicle can also be prevented.

In an embodiment, the method 200 further includes: during control of the vehicle to perform energy regeneration, increasing a brake torque of a brake system of the vehicle, and/or starting a wind resistance increasing apparatus.

For example, the wind resistance increasing apparatus includes but is not limited to a spoiler, a rear wing, and the like.

For example, the increasing a brake torque of a brake system of the vehicle includes: supplementing a hydraulic brake torque by using a chassis hydraulic brake system.

In this embodiment of this application, during torque intervention, the brake torque of the brake system of the vehicle may be increased and/or the wind resistance increasing apparatus may be started, to help avoid a prolonged brake distance of the vehicle caused by continuous torque intervention, and improve safety of the vehicle. In addition, this may further avoid giving the user a feeling of forward movement during torque intervention, and help improve the driving experience of the user.

During control of the vehicle to perform energy regeneration, because torque intervention is performed, the user may feel that deceleration effect of the vehicle is reduced. In this embodiment of this application, when torque intervention is performed, the user may be further prompted, by using an instrument screen prompt and a voice prompt, that the deceleration effect of the vehicle is reduced.

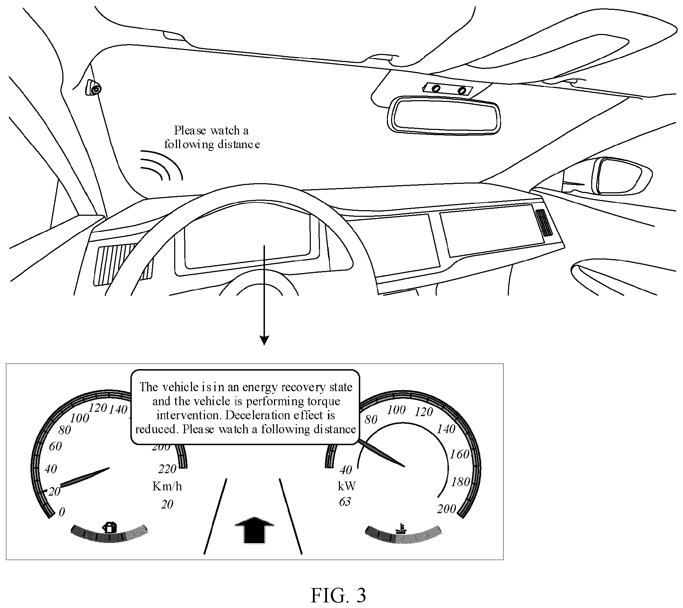

FIG. 3 shows a group of graphical user interfaces (graphical user interfaces, GUIs) according to an embodiment of this application. When a vehicle is in an energy regeneration state and the vehicle is performing torque intervention, prompt information "The vehicle is in an energy regeneration state and the vehicle is performing torque intervention. Deceleration effect is reduced. Please watch a following distance" is displayed on an instrument screen. In addition, a user may alternatively be prompted through voice "Please watch a following distance".

The foregoing uses a vehicle-mounted display screen and a voice prompt as an example for description. This embodiment of this application is not limited thereto. For example, the user may alternatively be prompted through a color change of an atmosphere light, vibration of a steering wheel, or the like.

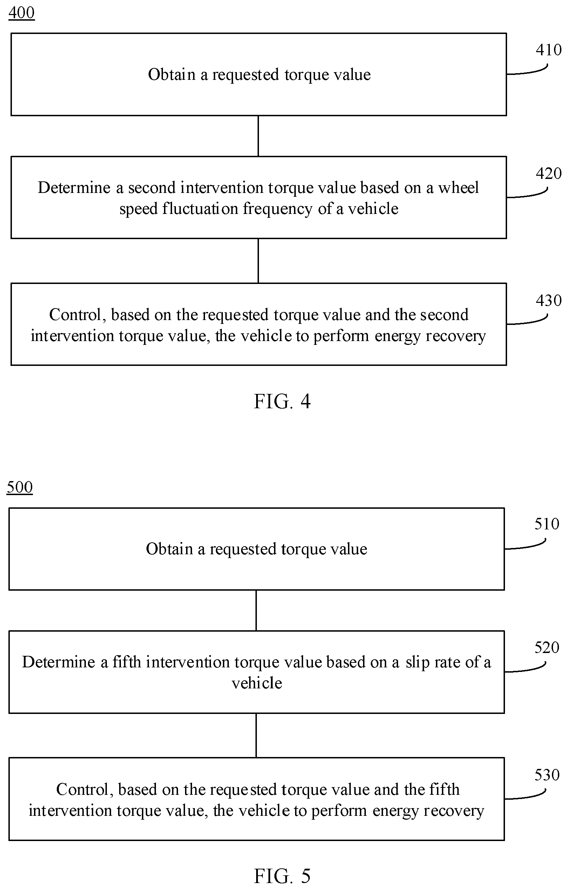

FIG. 4 shows a schematic flowchart of a torque adjustment method 400 according to an embodiment of this application. The method 400 may be performed by a vehicle, or the method 400 may be performed by the foregoing computing platform, or the method 400 may be performed by an SOC on the computing platform, or the method 400 may be performed by a processor on the computing platform, or the method 400 may be performed by a VCU, or the method 400 may be performed by an MCU, or the method 400 may be performed by a system including a VCU and an ESC, or the method 400 may be performed by a system including a VCU and an MCU. As shown in FIG. 4, the method 400 includes the following steps.

S410: Obtain a requested torque value.

In an embodiment, the obtaining a torque value includes: obtaining the requested torque value when the vehicle is in an energy regeneration state.

For a process of S410, refer to the process of S210. Details are not described herein again.

S420: Determine a second intervention torque value based on a wheel speed fluctuation frequency of the vehicle.

For the foregoing process of determining the second intervention torque value by using the wheel speed fluctuation frequency, refer to the descriptions in the foregoing embodiment. Details are not described herein again.

In an embodiment, the determining a second intervention torque value based on the wheel speed fluctuation frequency of the vehicle includes: determining a road surface type based on the wheel speed fluctuation frequency; and determining the second intervention torque value based on the road surface type.

S430: Control, based on the requested torque value and the second intervention torque value, the vehicle to perform energy regeneration.

In an embodiment, the controlling, based on the requested torque value and the second intervention torque value, the vehicle to perform energy regeneration includes: controlling, based on a difference between the requested torque value and the second intervention torque value, the vehicle to perform energy regeneration.

For example, the VCU determines, based on a current accelerator pedal opening and a current vehicle speed of the vehicle, that the requested torque value is 1000 N·m. The VCU determines, based on a current wheel speed fluctuation frequency and the mapping relationship shown in Table 2, that the second intervention torque value is 200 N·m. In this case, the VCU may output a difference (800 N·m) between the requested torque value and the first intervention torque value to a motor configured for energy regeneration. The motor may perform energy regeneration based on the difference between the requested torque value and the second intervention torque value.

In this embodiment of this application, the wheel speed fluctuation frequency of the vehicle varies when the vehicle travels on a normally paved road surface and an abnormally paved road surface. The wheel speed fluctuation frequency may be further considered during torque intervention. Therefore, whether a road surface on which the vehicle is currently located is a normally paved road surface or an abnormally paved road surface is identified by using the wheel speed fluctuation frequency. In this way, a wheel speed fluctuation is suppressed by torque intervention, so that an increase in a slip rate of a wheel can be avoided, and a probability of triggering an ABS or DTC can be reduced. In addition, the vehicle can be always kept in the energy regeneration state, to help improve driving experience of a user.

In an embodiment, the torque adjustment method provided in this embodiment of this application includes: obtaining a requested torque value; determining a second intervention torque value based on a type of a road surface on which the vehicle is located; and controlling, based on the requested torque value and the second intervention torque value, the vehicle to perform energy regeneration.

In an embodiment, before the determining a second intervention torque value based on a type of a road surface on which the vehicle is located, the method further includes: determining the type of the road surface based on a wheel speed fluctuation frequency of the vehicle; or determining the type of the road surface based on data collected by a sensor outside a cockpit of the vehicle; or obtaining the type of the road surface based on map information.

In an embodiment, a mapping relationship between a road surface type and an intervention torque value is stored in the vehicle.

FIG. 5 shows a schematic flowchart of a torque adjustment method 500 according to an embodiment of this application. The method 500 may be performed by a vehicle, or the method 500 may be performed by the foregoing computing platform, or the method 500 may be performed by an SOC on the computing platform, or the method 500 may be performed by a processor on the computing platform, or the method 500 may be performed by a VCU, or the method 500 may be performed by an MCU, or the method 500 may be performed by a system including a VCU and an ESC, or the method 500 may be performed by a system including a VCU and an MCU. As shown in FIG. 5, the method 500 includes the following steps.

S510: Obtain a requested torque value.

In an embodiment, the obtaining a torque value includes: obtaining the requested torque value when the vehicle is in an energy regeneration state.

For a process of S510, refer to the process of S210. Details are not described herein again.

S520: Determine a fifth intervention torque value based on a slip rate of the vehicle.

For the foregoing process of determining the fifth intervention torque value based on the slip rate of the vehicle, refer to the descriptions in the foregoing embodiment. Details are not described herein again.

S530: Control, based on the requested torque value and the fifth intervention torque value, the vehicle to perform energy regeneration.

For example, the VCU determines, based on a current accelerator pedal opening and a current vehicle speed of the vehicle, that the requested torque value is 1000 N·m. The VCU determines, based on a current slip rate and the mapping relationship shown in Table 5, that the fifth intervention torque value is 300 N·m. In this case, the VCU may output a difference (700 N·m) between the requested torque value and a first intervention torque value to a motor configured for energy regeneration. The motor may perform energy regeneration based on the difference between the requested torque value and the fifth intervention torque value.

In an embodiment, the method 500 includes: determining a correction coefficient based on the slip rate of the vehicle.

For example, Table 6 shows another mapping relationship between a slip rate and a correction coefficient.

**Table 6**

| Slip rate | Correction coefficient |
|---|---|
| [0, 10%) | 1 |
| [10%, 15%) | 0.7 |
| [15%, 20%) | 0.5 |
| ... | ... |

For example, when the slip rate of the vehicle is 12%, it may be determined, based on the mapping relationship shown in Table 6, that the correction coefficient is 0.7. In this case, the vehicle may obtain a final intervention torque value (for example, 700 N·m) based on a product of the requested torque value and the correction coefficient, so that the motor may perform energy regeneration based on the intervention torque value.

The mapping relationship between a slip rate and an intervention torque value shown in Table 6 is merely an example. This is not specifically limited in this embodiment of this application.

In this embodiment of this application, the slip rate of the vehicle may be considered during torque intervention. In this way, the fifth intervention torque value may be determined by using the slip rate, to control, based on the requested torque value and the fifth intervention torque value, the vehicle to perform energy regeneration. In this way, an increase in a slip rate of a wheel can be avoided, and a probability of triggering an ABS or DTC can be reduced. In addition, the vehicle can be always kept in the energy regeneration state, to help improve driving experience of a user.

The foregoing embodiments may be combined with each other. For example, the method 400 and the method 500 may be combined with each other. For example, the VCU determines, based on the current accelerator pedal opening and the current vehicle speed of the vehicle, that the requested torque value is 1000 N·m. The VCU determines, based on a current wheel speed fluctuation frequency and the mapping relationship shown in Table 2, that the second intervention torque value is 200 N·m. The VCU determines, based on the current slip rate and the mapping relationship shown in Table 5, that the fifth intervention torque value is 300 N·m. In this case, the VCU may output a difference (750 N·m) between the requested torque value and an average value of the second intervention torque value and the fifth intervention torque value to the motor configured for energy regeneration. The motor may perform energy regeneration based on the difference.

For another example, the VCU determines, based on the current accelerator pedal opening and the current vehicle speed of the vehicle, that the requested torque value is 1000 N·m. The VCU determines, based on a current wheel speed fluctuation frequency and the mapping relationship shown in Table 2, that the second intervention torque value is 200 N·m. The VCU determines, based on the current slip rate and the mapping relationship shown in Table 4, that the correction coefficient is 1.1. In this case, the VCU may output a difference (780 N·m) between the requested torque value and a product of the second intervention torque value and the correction coefficient to the motor configured for energy regeneration. The motor may perform energy regeneration based on the difference.

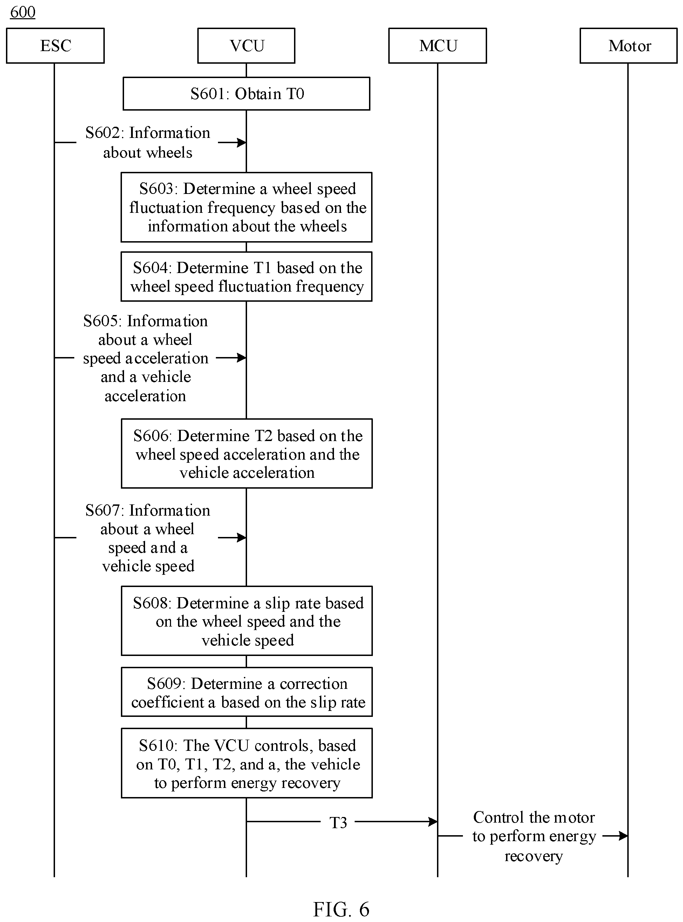

FIG. 6 shows a schematic flowchart of a torque adjustment method 600 according to an embodiment of this application. The method may be performed by a system including a VCU, an MCU, an ESC, and a motor. The method 600 includes the following steps.

S601: The VCU obtains a requested torque value T0.

The requested torque T0 may be the foregoing requested torque value.

For example, the VCU may determine the requested torque value T0 based on a current accelerator pedal opening of a vehicle and a current speed of the vehicle.

S602: The VCU obtains information about wheels sent by the ESC.

For example, the information about the wheels includes a quantity of times of periodic wheel speed fluctuations.

S603: The VCU determines a wheel speed fluctuation frequency based on the information about the wheels.

S604: The VCU determines an intervention torque value T1 based on the wheel speed fluctuation frequency.

The intervention torque value T1 above may be the foregoing second intervention torque value.

In an embodiment, the VCU may further determine an order of magnitude of intervention based on the wheel speed fluctuation frequency, and then determine T1 based on the order of magnitude of intervention and T0. For example, a value range of the order of magnitude of intervention is [0, 1). The intervention torque value T1 may be T0 multiplied by the order of magnitude of intervention.

A road surface type is distinguished based on different wheel speed fluctuation frequencies, and an order of magnitude of torque intervention may be selected in real time.

In an embodiment, the method 600 includes: The VCU determines an intervention torque value T1 based on a type of a road surface on which the vehicle is currently located.

For example, the VCU may determine the type of the road surface based on map information, or the VCU may determine the type of the road surface based on data collected by a sensor outside a cockpit of the vehicle, or the VCU may determine the type of the road surface based on a wheel speed fluctuation frequency.

S605: The VCU obtains information about a wheel acceleration and a vehicle acceleration sent by the ESC.

S606: The VCU determines an intervention torque value T2 based on the wheel acceleration and the vehicle acceleration.

The intervention torque value T2 above may be the foregoing first intervention torque value.

For the foregoing process in which the VCU determines the intervention torque value T2 based on the wheel acceleration and the vehicle acceleration, refer to the descriptions in the foregoing embodiment. Details are not described herein again.

In a scenario in which an ABS or DTC is triggered by mistake, the wheel acceleration of an axle which performs energy regeneration is usually greater than the vehicle acceleration. After a difference between the wheel acceleration and the vehicle acceleration exceeds a specific threshold, the ABS or the DTC is subsequently triggered. A torque intervention value is calculated based on the difference, so that triggering of the ABS or the DTC can be effectively prevented.

The energy regeneration axle may be an axle that is equipped with a drive motor and performs energy regeneration. For example, some electric vehicles are equipped with a drive motor on a rear axle, while some electric vehicles are equipped with a drive motor on both a front axle and a rear axle.

S607: The VCU obtains information about a wheel speed and a vehicle speed sent by the ESC.

S608: The VCU determines a current slip rate of the vehicle based on the wheel speed and the vehicle speed.

S609: The VCU determines a correction coefficient a based on the slip rate.

For that the VCU determines a correction coefficient a based on the slip rate, refer to the descriptions in the foregoing embodiment. Details are not described herein again.

The triggering of the ABS is closely related to the slip rate. The slip rate is introduced to calculate the correction coefficient a, to correct the torque intervention value. The triggering of the ABS may be prevented. In addition, the vehicle may be controlled to utilize an extreme slip rate, to obtain a maximum grip, and effectively decelerate.

There is no actual sequence among S601, S602 to S604, S605 and S606 and S607 to S609 above.

S610: The VCU controls, based on T0, T1, T2, and a, the vehicle to perform energy regeneration.

In an embodiment, that the VCU controls, based on T0, T1, T2, and a, the vehicle to perform energy regeneration includes: The VCU determines an energy regeneration torque T3 based on T0, T1, T2, and a. The VCU outputs T3 to the MCU, to enable the MCU to control, based on T3, the motor to perform energy regeneration.

A process of calculating T0, T1, T2, and a in the method 200 may be implemented in the VCU, or may be implemented in the MCU. This is not limited in this embodiment of this application.

For example, a calculation formula of T3 is shown in Formula (1): $T 3 = T 0 - min \left(T1,T2\right) \times a$ (1)

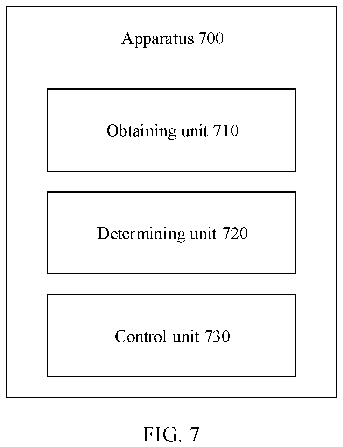

FIG. 7 shows a block diagram of a torque adjustment apparatus 700 according to an embodiment of this application. As shown in FIG. 7, the apparatus 700 includes: an obtaining unit 710, configured to obtain a requested torque value; a determining unit 720, configured to determine a first intervention torque value based on a wheel acceleration and a vehicle acceleration of a vehicle; and a control unit 730, configured to control, based on the requested torque value and the first intervention torque value, the vehicle to perform energy regeneration.

Optionally, the obtaining unit 710 is further configured to obtain a road surface type; and the determining unit 720 is further configured to determine a second intervention torque value based on the road surface type, where the control unit 730 is configured to control, based on the requested torque value, the first intervention torque value, and the second intervention torque value, the vehicle to perform energy regeneration.

Optionally, the obtaining unit 710 is configured to: obtain a wheel speed fluctuation frequency of the vehicle; and determine the road surface type based on the wheel speed fluctuation frequency.

Optionally, the obtaining unit 710 is further configured to obtain a wheel speed fluctuation frequency of the vehicle; and the determining unit 720 is further configured to determine the second intervention torque value based on the wheel speed fluctuation frequency.

Optionally, the determining unit 720 is configured to determine a third intervention torque value based on the first intervention torque value and the second intervention torque value; and the control unit 730 is configured to control, based on the requested torque value and the third intervention torque value, the vehicle to perform energy regeneration.

Optionally, the determining unit 720 is configured to determine a lower one of the first intervention torque value and the second intervention torque value as the third intervention torque value.

Optionally, the obtaining unit 710 is further configured to obtain a slip rate of the vehicle; and the determining unit 720 is further configured to determine a correction coefficient based on the slip rate, where the control unit 730 is configured to: determine a fourth intervention torque value based on the third intervention torque value and the correction coefficient; and control, based on the requested torque value and the fourth intervention torque value, the vehicle to perform energy regeneration.

Optionally, the obtaining unit 710 is further configured to obtain a slip rate of the vehicle; and the determining unit 720 is further configured to determine a correction coefficient based on the slip rate, where the control unit 730 is configured to: determine a fifth intervention torque value based on the first intervention torque value and the correction coefficient; and control, based on the requested torque value and the fifth intervention torque value, the vehicle to perform energy regeneration.

Optionally, the control unit 730 is further configured to: when a quantity of times of torque intervention during control of the vehicle to perform energy regeneration is greater than or equal to a preset quantity of times, control, based on a historical torque intervention value, the vehicle to perform energy regeneration; or when duration of torque intervention during control of the vehicle to perform energy regeneration is greater than or equal to preset duration, control, based on a historical torque intervention value, the vehicle to perform energy regeneration.

Optionally, the control unit 730 is further configured to: during control of the vehicle to perform energy regeneration, increase a brake torque of a brake system of the vehicle, and/or start a wind resistance increasing apparatus.

Optionally, the obtaining unit 710 is configured to determine the requested torque value based on at least one of a vehicle speed of the vehicle, an accelerator pedal opening of the vehicle, and a brake pedal opening of the vehicle.

In an embodiment, the obtaining unit 710 is configured to obtain a requested torque value when a vehicle is in an energy regeneration state; the determining unit 720 is configured to determine a second intervention torque value based on a wheel fluctuation frequency of the vehicle; and the control unit 730 is configured to control, based on the requested torque value and the second intervention torque value, the vehicle to perform energy regeneration.

In an embodiment, the obtaining unit 710 is configured to obtain a requested torque value when a vehicle is in an energy regeneration state; the determining unit 720 is configured to determine a fifth intervention torque value based on a slip rate of the vehicle; and the control unit 730 is configured to control, based on the requested torque value and the fifth intervention torque value, the vehicle to perform energy regeneration.

For example, the obtaining unit 710 may be the computing platform in FIG. 1, or a processing circuit, a processor, or a controller on the computing platform. For example, the obtaining unit 710 is the processor 151 on the computing platform. The processor 151 may determine the requested torque value based on a current accelerator pedal opening of the vehicle and a current vehicle speed.

For another example, the determining unit 720 may be the computing platform in FIG. 1, or a processing circuit, a processor, or a controller on the computing platform. For example, the determining unit 720 is the processor 152 on the computing platform. The processor 152 may obtain the wheel acceleration and the vehicle acceleration of the vehicle from the ESC, to determine the first intervention torque value based on the wheel acceleration and the vehicle acceleration. Alternatively, the processor 152 may obtain information about wheels from the ESC, to determine the wheel speed fluctuation frequency based on the information about the wheels. Therefore, the second intervention torque value may be determined based on the wheel speed fluctuation frequency. Alternatively, the processor 152 may obtain information about a current vehicle speed and a current wheel speed of the vehicle from the ESC, to determine the slip rate of the vehicle based on the vehicle speed and the wheel speed. Therefore, the correction coefficient or the fifth intervention torque value is determined based on the slip rate.

For still another example, the functions implemented by the control unit 730 may be implemented by the computing platform in FIG. 1, or the processing circuit, the processor, or the controller on the computing platform. For example, the control unit 730 is the processor 153 on the computing platform. The processor 153 may obtain the requested torque value from the processor 151 and obtain the first intervention torque value from the processor 152, to control, based on the requested torque value and the first intervention torque value, the vehicle to perform energy regeneration. For example, the processor 153 may output a difference between the requested torque value and the first intervention torque value to a motor, so that the motor may perform energy regeneration based on the difference.

The functions implemented by the obtaining unit 710, the functions implemented by the determining unit 720, and the functions implemented by the control unit 730 above may be implemented by different processors, or some functions may be implemented by a same processor, or all functions may be implemented by a same processor. This is not limited in this embodiment of this application.

It should be understood that division into the units in the apparatus is merely logical function division. In actual implementation, all or some of the units may be integrated into one physical entity, or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or functions of the units in the apparatus. The processor is, for example, a general-purpose processor, such as a CPU or a microprocessor, and the memory is a memory inside the apparatus or a memory outside the apparatus. Alternatively, the units in the apparatus may be implemented in a form of a hardware circuit, and functions of some or all units may be implemented by designing the hardware circuit. The hardware circuit may be understood as one or more processors. For example, in an implementation, the hardware circuit is an ASIC, and functions of some or all units are implemented by designing a logical relationship between elements in the circuit. For another example, in another implementation, the hardware circuit may be implemented by using a PLD. An FPGA is used as an example, the FPGA may include a large quantity of logic gate circuits, and a connection relationship between the logic gate circuits is configured by using a configuration file, to implement functions of some or all of the foregoing units. All units of the foregoing apparatus may be implemented in a form of software invoked by a processor, or may be implemented in a form of a hardware circuit, or some of the units are implemented in a form of software invoked by a processor, and the remaining units are implemented in a form of a hardware circuit.

In this embodiment of this application, the processor is a circuit having a signal processing capability. In an implementation, the processor may be a circuit having an instruction reading and running capability, for example, a CPU, a microprocessor, a GPU, or a DSP. In another implementation, the processor may implement a specific function by using a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It may be learned that the units in the apparatus above may be configured as one or more processors (or processing circuits) for implementing the foregoing method, for example, a CPU, a GPU, an NPU, a TPU, a DPU, a microprocessor, a DSP, an ASIC, an FPGA, or a combination of at least two of these processor forms.

In addition, all or some of the units of the apparatus above may be integrated together, or may be implemented independently. In an implementation, these units are integrated together and implemented in a form of an SOC. The SOC may include at least one processor, configured to implement any one of the methods or implement functions of the units of the apparatus. Types of the at least one processor may be different. For example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions, and the processing unit executes the instructions stored in the storage unit, to enable the apparatus to perform the methods or steps performed in the foregoing embodiments.

Optionally, if the apparatus is located in a vehicle, the processing unit may be the processors 151 to 15n shown in FIG. 1.

An embodiment of this application further provides a vehicle. The vehicle may include the apparatus 600, the apparatus 700, or the apparatus 800.

An embodiment of this application further provides a computer program product. The computer program product includes computer program code, and when the computer program code is run on a computer, the computer is enabled to perform the foregoing methods.

An embodiment of this application further provides a computer-readable medium. The computer-readable medium stores program code, and when the computer program code is run on a computer, the computer is enabled to perform the foregoing methods.

In an implementation process, steps in the foregoing methods may be implemented by using a hardware integrated logic circuit in the processor, or by using instructions in a form of software. The method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be understood that, in this embodiment of this application, the memory may include a read-only memory and a random access memory, and provide instructions and data to the processor.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A skilled person may use different methods for each particular application to implement the described functions, but it should not be considered that the implementation goes beyond the scope of this application.

It may be clearly understood by a person skilled in the art that, for the purpose of convenient and brief description, for detailed working processes of the foregoing system, apparatus, and unit, refer to corresponding processes in the method embodiments. Details are not described herein.

## Claims

1. A torque adjustment method, comprising:
obtaining a requested torque value;
determining a first intervention torque value based on a wheel acceleration and a vehicle acceleration of a vehicle; and
controlling, based on the requested torque value and the first intervention torque value, the vehicle to perform energy regeneration.

2. The method according to claim **1,** wherein the method further comprises:
obtaining a road surface type; and
determining a second intervention torque value based on the road surface type, wherein
the controlling, based on the requested torque value and the first intervention torque value, the vehicle to perform energy regeneration comprises:
controlling, based on the requested torque value, the first intervention torque value, and the second intervention torque value, the vehicle to perform energy regeneration.

3. The method according to claim 2, wherein the obtaining a road surface type comprises:
obtaining a wheel speed fluctuation frequency of the vehicle; and
determining the road surface type based on the wheel speed fluctuation frequency.

4. The method according to claim 2 or 3, wherein the controlling, based on the requested torque value, the first intervention torque value, and the second intervention torque value, the vehicle to perform energy regeneration comprises:
determining a third intervention torque value based on the first intervention torque value and the second intervention torque value; and
controlling, based on the requested torque value and the third intervention torque value, the vehicle to perform energy regeneration.

5. The method according to claim 4, wherein the determining a third intervention torque value based on the first intervention torque value and the second intervention torque value comprises:
determining a lower one of the first intervention torque value and the second intervention torque value as the third intervention torque value.

6. The method according to claim 4 or 5, wherein the method further comprises:
obtaining a slip rate of the vehicle; and
determining a correction coefficient based on the slip rate, wherein
the controlling, based on the requested torque value and the third intervention torque value, the vehicle to perform energy regeneration comprises:
determining a fourth intervention torque value based on the third intervention torque value and the correction coefficient; and
controlling, based on the requested torque value and the fourth intervention torque value, the vehicle to perform energy regeneration.

7. The method according to claim 1, wherein the method further comprises:
obtaining a slip rate of the vehicle; and
determining a correction coefficient based on the slip rate, wherein
the controlling, based on the requested torque value and the first intervention torque value, the vehicle to perform energy regeneration comprises:
determining a fifth intervention torque value based on the first intervention torque value and the correction coefficient; and
controlling, based on the requested torque value and the fifth intervention torque value, the vehicle to perform energy regeneration.

8. A torque adjustment apparatus, comprising:
an obtaining unit, configured to obtain a requested torque value;
a determining unit, configured to determine a first intervention torque value based on a wheel acceleration and a vehicle acceleration of a vehicle; and
a control unit, configured to control, based on the requested torque value and the first intervention torque value, the vehicle to perform energy regeneration.

9. The apparatus according to claim 8, wherein the obtaining unit is further configured to obtain a road surface type;
the determining unit is further configured to determine a second intervention torque value based on the road surface type; and
the control unit is configured to:
control, based on the requested torque value, the first intervention torque value, and the second intervention torque value, the vehicle to perform energy regeneration.

10. The apparatus according to claim 9, wherein the obtaining unit is further configured to:
obtain a wheel speed fluctuation frequency of the vehicle; and
determine the road surface type based on the wheel speed fluctuation frequency.

11. The apparatus according to claim 9 or 10, wherein the determining unit is configured to determine a third intervention torque value based on the first intervention torque value and the second intervention torque value; and
the control unit is configured to control, based on the requested torque value and the third intervention torque value, the vehicle to perform energy regeneration.

12. The apparatus according to claim 11, wherein the determining unit is configured to determine a lower one of the first intervention torque value and the second intervention torque value as the third intervention torque value.

13. The apparatus according to claim 11 or 12, wherein
the obtaining unit is further configured to obtain a slip rate of the vehicle;
the determining unit is further configured to determine a correction coefficient based on the slip rate; and
the control unit is configured to: determine a fourth intervention torque value based on the third intervention torque value and the correction coefficient; and
control, based on the requested torque value and the fourth intervention torque value, the vehicle to perform energy regeneration.

14. The apparatus according to claim 8, wherein
the obtaining unit is further configured to obtain a slip rate of the vehicle;
the determining unit is further configured to determine a correction coefficient based on the slip rate; and
the control unit is configured to: determine a fifth intervention torque value based on the first intervention torque value and the correction coefficient; and
control, based on the requested torque value and the fifth intervention torque value, the vehicle to perform energy regeneration.

15. A computer-readable storage medium, wherein the computer-readable storage medium stores a computer program, and when the computer program is executed by a computer, the method according to any one of claims 1 to 7 is implemented.

## Patentansprüche

1. Drehmomenteinstellverfahren, das Folgendes umfasst:
Erhalten eines angeforderten Drehmomentwerts;
Bestimmen eines ersten Eingriffsdrehmomentwerts basierend auf einer Radbeschleunigung und einer Fahrzeugbeschleunigung eines Fahrzeugs; und
Steuern, basierend auf dem angeforderten Drehmomentwert und dem ersten Eingriffsdrehmomentwert, des Fahrzeugs zum Durchführen einer Energierückgewinnung.

2. Verfahren nach Anspruch 1, wobei das Verfahren ferner Folgendes umfasst:
Erhalten einer Fahrbahnoberflächenart; und
Bestimmen eines zweiten Eingriffsdrehmomentwerts basierend auf der Fahrbahnoberflächenart, wobei
das Steuern, basierend auf dem angeforderten Drehmomentwert und dem ersten Eingriffsdrehmomentwert, des Fahrzeugs zum Durchführen einer Energierückgewinnung Folgendes umfasst:
Steuern, basierend auf dem angeforderten Drehmomentwert, dem ersten Eingriffsdrehmomentwert und dem zweiten Eingriffsdrehmomentwert, des Fahrzeugs zum Durchführen einer Energierückgewinnung.

3. Verfahren nach Anspruch 2, wobei das Erhalten einer Fahrbahnoberflächenart Folgendes umfasst:
Erhalten einer Raddrehzahlschwankungsfrequenz des Fahrzeugs; und
Bestimmen der Fahrbahnoberflächenart basierend auf der Raddrehzahlschwankungsfrequenz.

4. Verfahren nach Anspruch 2 oder 3, wobei das Steuern, basierend auf dem angeforderten Drehmomentwert, dem ersten Eingriffsdrehmomentwert und dem zweiten Eingriffsdrehmomentwert, des Fahrzeugs zum Durchführen einer Energierückgewinnung Folgendes umfasst:
Bestimmen eines dritten Eingriffsdrehmomentwerts basierend auf dem ersten Eingriffsdrehmomentwert und dem zweiten Eingriffsdrehmomentwert; und
Steuern, basierend auf dem angeforderten Drehmomentwert und dem dritten Eingriffsdrehmomentwert, des Fahrzeugs zum Durchführen einer Energierückgewinnung.

5. Verfahren nach Anspruch 4, wobei das Bestimmen eines dritten Eingriffsdrehmomentwerts basierend auf dem ersten Eingriffsdrehmomentwert und dem zweiten Eingriffsdrehmomentwert Folgendes umfasst:
Bestimmen eines niedrigeren des ersten Eingriffsdrehmomentwerts und des zweiten Eingriffsdrehmomentwerts als den dritten Eingriffsdrehmomentwert.

6. Verfahren nach Anspruch 4 oder 5, wobei das Verfahren ferner Folgendes umfasst:
Erhalten einer Schlupfrate des Fahrzeugs; und
Bestimmen eines Korrekturkoeffizienten basierend auf der Schlupfrate, wobei
das Steuern, basierend auf dem angeforderten Drehmomentwert und dem dritten Eingriffsdrehmomentwert, des Fahrzeugs zum Durchführen einer Energierückgewinnung Folgendes umfasst:
Bestimmen eines vierten Eingriffsdrehmomentwerts basierend auf dem dritten Eingriffsdrehmomentwert und dem Korrekturkoeffizienten; und
Steuern, basierend auf dem angeforderten Drehmomentwert und dem vierten Eingriffsdrehmomentwert, des Fahrzeugs zum Durchführen einer Energierückgewinnung.

7. Verfahren nach Anspruch 1, wobei das Verfahren ferner Folgendes umfasst:
Erhalten einer Schlupfrate des Fahrzeugs; und
Bestimmen eines Korrekturkoeffizienten basierend auf der Schlupfrate, wobei
das Steuern, basierend auf dem angeforderten Drehmomentwert und dem ersten Eingriffsdrehmomentwert, des Fahrzeugs zum Durchführen einer Energierückgewinnung Folgendes umfasst:
Bestimmen eines fünften Eingriffsdrehmomentwerts basierend auf dem ersten Eingriffsdrehmomentwert und dem Korrekturkoeffizienten; und
Steuern, basierend auf dem angeforderten Drehmomentwert und dem fünften Eingriffsdrehmomentwert, des Fahrzeugs zum Durchführen einer Energierückgewinnung.

8. Drehmomenteinstellvorrichtung, die Folgendes umfasst:
eine Erhaltungseinheit, die dazu ausgelegt ist, einen angeforderten Drehmomentwert zu erhalten;
eine Bestimmungseinheit, die dazu ausgelegt ist, einen ersten Eingriffsdrehmomentwert basierend auf einer Radbeschleunigung und einer Fahrzeugbeschleunigung eines Fahrzeugs zu bestimmen; und
eine Steuereinheit, die dazu ausgelegt ist, basierend auf dem angeforderten Drehmomentwert und dem ersten Eingriffsdrehmomentwert das Fahrzeug zum Durchführen einer Energierückgewinnung zu steuern.

9. Vorrichtung nach Anspruch 8, wobei die Erhaltungseinheit ferner dazu ausgelegt ist,
eine Fahrbahnoberflächenart zu erhalten;
wobei die Bestimmungseinheit ferner dazu ausgelegt ist, einen zweiten Eingriffsdrehmomentwert basierend auf der Fahrbahnoberflächenart zu bestimmen; und
wobei die Steuereinheit zu Folgendem ausgelegt ist:
Steuern, basierend auf dem angeforderten Drehmomentwert, dem ersten Eingriffsdrehmomentwert und dem zweiten Eingriffsdrehmomentwert, des Fahrzeugs zum Durchführen einer Energierückgewinnung.

10. Vorrichtung nach Anspruch 9, wobei die Erhaltungseinheit ferner zu Folgendem ausgelegt ist:
Erhalten einer Raddrehzahlschwankungsfrequenz des Fahrzeugs; und
Bestimmen der Fahrbahnoberflächenart basierend auf der Raddrehzahlschwankungsfrequenz.

11. Vorrichtung nach Anspruch 9 oder 10, wobei die Bestimmungseinheit dazu ausgelegt ist, basierend auf dem ersten Eingriffsdrehmomentwert und dem zweiten Eingriffsdrehmomentwert einen dritten Eingriffsdrehmomentwert zu bestimmen; und
wobei die Steuereinheit dazu ausgelegt ist, basierend auf dem angeforderten Drehmomentwert und dem dritten Eingriffsdrehmomentwert das Fahrzeug zum Durchführen einer Energierückgewinnung zu steuern.

12. Vorrichtung nach Anspruch 11, wobei die Bestimmungseinheit dazu ausgelegt ist, einen niedrigeren des ersten Eingriffsdrehmomentwerts und des zweiten Eingriffsdrehmomentwerts als den dritten Eingriffsdrehmomentwert zu bestimmen.

13. Vorrichtung nach Anspruch 11 oder 12, wobei
die Erhaltungseinheit ferner dazu ausgelegt ist, eine Schlupfrate des Fahrzeugs zu erhalten;
die Bestimmungseinheit ferner dazu ausgelegt ist, basierend auf der Schlupfrate einen Korrekturkoeffizienten zu bestimmen; und
die Steuereinheit zu Folgendem ausgelegt ist: Bestimmen eines vierten Eingriffsdrehmomentwerts basierend auf dem dritten Eingriffsdrehmomentwert und dem Korrekturkoeffizienten; und
Steuern, basierend auf dem angeforderten Drehmomentwert und dem vierten Eingriffsdrehmomentwert, des Fahrzeugs zum Durchführen einer Energierückgewinnung.

14. Vorrichtung nach Anspruch 8, wobei
die Erhaltungseinheit ferner dazu ausgelegt ist, eine Schlupfrate des Fahrzeugs zu erhalten;
die Bestimmungseinheit ferner dazu ausgelegt ist, basierend auf der Schlupfrate einen Korrekturkoeffizienten zu bestimmen; und
die Steuereinheit zu Folgendem ausgelegt ist: Bestimmen eines fünften Eingriffsdrehmomentwerts basierend auf dem ersten Eingriffsdrehmomentwert und dem Korrekturkoeffizienten; und
Steuern, basierend auf dem angeforderten Drehmomentwert und dem fünften Eingriffsdrehmomentwert, des Fahrzeugs zum Durchführen einer Energierückgewinnung.

15. Computerlesbares Speichermedium, wobei das computerlesbare Speichermedium ein Computerprogramm speichert und bei Ausführen des Computerprogramms durch einen Computer das Verfahren nach einem der Ansprüche 1 bis 7 implementiert wird.

## Revendications

1. Procédé d'ajustement de couple, comprenant :
l'obtention d'une valeur de couple demandée ;
la détermination d'une première valeur de couple d'intervention sur la base d'une accélération de roue et d'une accélération de véhicule d'un véhicule ; et
la commande, sur la base de la valeur de couple demandée et de la première valeur de couple d'intervention, du véhicule pour réaliser une régénération d'énergie.

2. Procédé selon la revendication 1, dans lequel le procédé comprend en outre :
l'obtention d'un type de surface de route ; et
la détermination d'une deuxième valeur de couple d'intervention sur la base du type de surface de route, dans lequel
la commande, sur la base de la valeur de couple demandée et de la première valeur de couple d'intervention, du véhicule pour réaliser une régénération d'énergie comprend :
la commande, sur la base de la valeur de couple demandée, de la première valeur de couple d'intervention, et de la deuxième valeur de couple d'intervention, du véhicule pour réaliser une régénération d'énergie.

3. Procédé selon la revendication 2, dans lequel l'obtention d'un type de surface de route comprend :
l'obtention d'une fréquence de fluctuation de vitesse de roue du véhicule ; et
la détermination du type de surface de route sur la base de la fréquence de fluctuation de vitesse de roue.

4. Procédé selon la revendication 2 ou 3, dans lequel la commande, sur la base de la valeur de couple demandée, de la première valeur de couple d'intervention, et de la deuxième valeur de couple d'intervention, du véhicule pour réaliser une régénération d'énergie comprend :
la détermination d'une troisième valeur de couple d'intervention sur la base de la première valeur de couple d'intervention et de la deuxième valeur de couple d'intervention ; et
la commande, sur la base de la valeur de couple demandée et de la troisième valeur de couple d'intervention, du véhicule pour réaliser une régénération d'énergie.

5. Procédé selon la revendication 4, dans lequel la détermination d'une troisième valeur de couple d'intervention sur la base de la première valeur de couple d'intervention et de la deuxième valeur de couple d'intervention comprend :
la détermination d'une valeur plus basse parmi la première valeur de couple d'intervention et la deuxième valeur de couple d'intervention en tant que troisième valeur de couple d'intervention.

6. Procédé selon la revendication 4 ou 5, dans lequel le procédé comprend en outre :
l'obtention d'un taux de glissement du véhicule ; et
la détermination d'un coefficient de correction sur la base du taux de glissement, dans lequel la commande, sur la base de la valeur de couple demandée et de la troisième valeur de couple d'intervention, du véhicule pour réaliser une régénération d'énergie comprend :
la détermination d'une quatrième valeur de couple d'intervention sur la base de la troisième valeur de couple d'intervention et du coefficient de correction ; et
la commande, sur la base de la valeur de couple demandée et de la quatrième valeur de couple d'intervention, du véhicule pour réaliser une régénération d'énergie.

7. Procédé selon la revendication 1, dans lequel le procédé comprend en outre :
l'obtention d'un taux de glissement du véhicule ; et
la détermination d'un coefficient de correction sur la base du taux de glissement, dans lequel
la commande, sur la base de la valeur de couple demandée et de la première valeur de couple d'intervention, du véhicule pour réaliser une régénération d'énergie comprend :
la détermination d'une cinquième valeur de couple d'intervention sur la base de la première valeur de couple d'intervention et du coefficient de correction ; et
la commande, sur la base de la valeur de couple demandée et de la cinquième valeur de couple d'intervention, du véhicule pour réaliser une régénération d'énergie.

8. Appareil d'ajustement de couple, comprenant :
une unité d'obtention, configurée pour obtenir une valeur de couple demandée ;
une unité de détermination, configurée pour déterminer une première valeur de couple d'intervention sur la base d'une accélération de roue et d'une accélération de véhicule d'un véhicule ; et
une unité de commande, configurée pour commander, sur la base de la valeur de couple demandée et de la première valeur de couple d'intervention, le véhicule pour réaliser une régénération d'énergie.

9. Appareil selon la revendication 8, dans lequel l'unité d'obtention est en outre configurée pour obtenir un type de surface de route ;
l'unité de détermination est en outre configurée pour déterminer une deuxième valeur de couple d'intervention sur la base du type de surface de route ; et
l'unité de commande est configurée pour :
commander, sur la base de la valeur de couple demandée, de la première valeur de couple d'intervention, et de la deuxième valeur de couple d'intervention, le véhicule pour réaliser une régénération d'énergie.

10. Appareil selon la revendication 9, dans lequel l'unité d'obtention est en outre configurée pour :
obtenir une fréquence de fluctuation de vitesse de roue du véhicule ; et
déterminer le type de surface de route sur la base de la fréquence de fluctuation de vitesse de roue.

11. Appareil selon la revendication 9 ou 10, dans lequel l'unité de détermination est configurée pour déterminer une troisième valeur de couple d'intervention sur la base de la première valeur de couple d'intervention et de la deuxième valeur de couple d'intervention ; et
l'unité de commande est configurée pour commander, sur la base de la valeur de couple demandée et de la troisième valeur de couple d'intervention, le véhicule pour réaliser une régénération d'énergie.

12. Appareil selon la revendication 11, dans lequel l'unité de détermination est configurée pour déterminer une valeur plus basse parmi la première valeur de couple d'intervention et la deuxième valeur de couple d'intervention en tant que troisième valeur de couple d'intervention.

13. Appareil selon la revendication 11 ou 12, dans lequel
l'unité d'obtention est en outre configurée pour obtenir un taux de glissement du véhicule ;
l'unité de détermination est en outre configurée pour déterminer un coefficient de correction sur la base du taux de glissement ; et
l'unité de commande est configurée pour : déterminer une quatrième valeur de couple d'intervention sur la base de la troisième valeur de couple d'intervention et du coefficient de correction ; et
commander, sur la base de la valeur de couple demandée et de la quatrième valeur de couple d'intervention, le véhicule pour réaliser une régénération d'énergie.

14. Appareil selon la revendication 8, dans lequel
l'unité d'obtention est en outre configurée pour obtenir un taux de glissement du véhicule ;
l'unité de détermination est en outre configurée pour déterminer un coefficient de correction sur la base du taux de glissement ; et
l'unité de commande est configurée pour : déterminer une cinquième valeur de couple d'intervention sur la base de la première valeur de couple d'intervention et du coefficient de correction ; et
commander, sur la base de la valeur de couple demandée et de la cinquième valeur de couple d'intervention, le véhicule pour réaliser une régénération d'énergie.

15. Support de stockage lisible par ordinateur, dans lequel le support de stockage lisible par ordinateur stocker un programme d'ordinateur, et, lorsque le programme d'ordinateur est exécuté par un ordinateur, le procédé selon l'une quelconque des revendications 1 à 7 est mis en œuvre.
